(19)

Europäisches
Patentamt
European
Patent Office
Office européen
des brevets

(11)     EP 2 077 476 A1

## (12)     EUROPEAN PATENT APPLICATION

(43) Date of publication:
**08.07.2009 Bulletin 2009/28**

(51) Int Cl.:
**G05B 23/02** *(2006.01)*

(21) Application number: **08464013.5**

(22) Date of filing: **31.07.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **27.12.2007 RO 200700901**<br>             **29.07.2008 RO 200800592**<br><br>(71) Applicant: **Institutul de Mecanica Solidelor al**<br>**Academiei**<br>**Romane**<br>**Bucuresti, Cod 010141 (RO)** | (72) Inventors:<br>• **Vladareanu, Luige**<br>  **Bucuresti (RO)**<br>• **Velea, Lucian Marius**<br>  **Bucuresti (RO)**<br>• **Munteanu, Radu Adrian**<br>  **Cluj Napoca (RO)**<br>• **Munteanu, Mihai Stelian**<br>  **Cluj Napoca (RO)**<br>• **Vladareanu, Victor**<br>  **Bucuresti (RO)**<br>• **Velea, Alida Lia Mariana**<br>  **Baia Mare (RO)**<br>• **Moga, Daniel**<br>  **judet Salaj (RO)** |

## (54)     Real-time control method and control device for an actuator

(57)     The real-time control method and device for actuators, intended for determining characteristics, functional parameters and performances of progressive actuators with direct application in the production of testing stands for electric motors. The method and device are made up of, referring to the diagram, a servo-actuator module (SVA) with high performance related to the tested actuator, which engages by means of a module the coupling (MC), the test actuator (ATs), in accordance with complex trial regimes generated by the servo-actuator force controller (CSV) and sends to the open architecture control system (SCAD) n measuring signals, which processed with a process computer PC-Server (PCS), with high speed and high computation power, generates the mathematical module of the servo-actuator (SVA) in offline mode, of the tested actuator in online mode and the correlation between them. In the end, information is generated for statistical characterization, diagnosis and determining characteristic, parameters and performances of the tested actuator and sending the data via the internet. Thus, one manages to obtain real-time control of the actuators without the input signals to be generated by the actuator tested by means of direct measurement which leads to reducing trial duration, increasing measurement precision, and accomplishing a series of complex trial regimes.

Fig. 5. The comparative graphs of effective power related to the method's performances

**Description**

The invention refers to a method and a device used to control an actuator, in real time, intended for determining characteristics, functional parameters and performances of progressive actuators with direct application in the production of testing stands for electric motors.

For real-time control of actuators, with a view to determining characteristics, functional parameters and performances, there are many technical solutions that imply the direct measurement of input signals (acceleration, current, power, couple) received from transducers mounted on the actuator. The trial actuator is connected to a power supply, which is usually passive, is integrated in the control system and the actuator's control signals are generated.

The disadvantage with this solution is mainly that in order to determine characteristics, functional parameters and performances of progressive actuators, measurement transducers and command elements must be transferred from the tested actuator to another actuator, a fact which leads to longer duration periods for the operation; measurements are less reliable because of the human operator; there exists the possibility of a faulty coupling between the measurement transducers and the actuator which may lead to measurement errors.

The problem this invention solves is allowing real-time control for determining characteristics, functional parameters and performances of progressive actuators, while reducing trial duration, increasing measurement precision, and accomplishing a series of complex trial regimes.

**The method conform to this invention** eliminates the disadvantages presented above. In order to control actuators in real time so as to determine characteristics, functional parameters and performances, a measurement of the characteristics, functional parameters and performances of a high performance servo-actuator in relation to the tested actuators is performed, its role being that of reference point for measurements and which represents the charge of the tested actuator, coupled with the actuator by means of a coupling transducer, controlled with a control system with open architecture, which together with a process computer PC-SERVER, with high speed and high computation power, generates the mathematical model of the servo-actuator in offline mode and the mathematical model of the tested actuator in online mode, allows a correlation between them by means of mathematical modeling, teach-in functions in offline mode of the servo-actuator, generates complex trial regimes of the tested actuator, like characterization on starting signal type Dirac, right signal, movement laws with predefined functions as regards speed/acceleration: trapezoid signal, sinusoid signal and/or other signals with predefined motion laws. Finally, according to the presented method, we obtain real-time control of actuators without the input signals being generated by the tested actuator through direct measurement.

**The device conform to this invention** eliminates the disadvantages mentioned above in that it is composed of a high performance **servo-actuator module** related to the tested actuators, which engages the tested actuator by means of a coupling, in accordance with complex trial regimes generated by the servo-actuator force controller and sends to the open architecture control system the measurement signals for determining the mathematical correlation model and the mathematical modelling of the actuator tested, a **servo-actuator force controller** which ensures the conversion of the energy received from the force supply module to the servo-actor in accordance with the control signals generated by the open architecture system, a controller **of the test actuator** which ensures the conversion of the energy from the force supply module to the tested actuator following a normal regime, without parameter variation, a **coupling module** that ensures the mechanical coupling between the servo-actuator module and the tested actuator and sends to the open architecture control system the measuring signal of the coupling created between the two actuators, a **supply control transducer module** which transmits measuring signals with a view to characterize the force supply of the servo-actuator module, an **open architecture** control system which receives measuring signals from the servo-actuator module (acceleration, speed, temperature, electromagnetic flow.), from the coupling module, from the supply control transducers which it acquires, processes digitally and sends as measuring signals to the PC-Server module, also receives control signals from the PC-Server module and by means of processing sends regime control signals to the servo-actuator force controller, a **communication interface** which receives measuring signals from the open architecture system and sends processed signals from the PC-Server, a **PC-Server module** which receives measuring signals from the open architecture control system and processes them by means of the following software modules: the teach-in module, the mathematical model module of the servo-actuator, the mathematical modelling module of the tested actuator, the calculation module for the mathematical correlation module, the data base module, the statistical characterization module, the Internet communication module, a teach-in module in offline mode, through which the signals necessary for the mathematical modelling of the servo-actuator are generated without coupling the servo-actuator to the test actuator, a **mathematical model module of the servo-actuator** which generates the mathematical model of the servo-actuator on the basis of the measuring signals received from the open architecture control system during the teach-in and represents the input data of the modelling mathematical module of the tested actuator and the calculation module of the mathematical correlation module, a **mathematical modelling module of the tested actuator** in online mode which performs, in real-time, during the testing, the mathematical modelling of the tested actuator by means of: (1) the modifications that appear at signals measured by the servo-actuator following a coupling of the test actuator and (2) the results of the mathematical correlation model, a **calculation module of the mathematical correlation** module which effects the mathematical correlation model between the signals received from the servo-actuator with offline functioning and the signals with online functioning, **a data base module** which, by means of indexing, memorizes the data resulted from each test actuator, **a statistical characterization module** which processes the data from the data base and generates information for statistical characterization, diagnosis and determining characteristics, functional parameters and performances of the tested actuator, a **Internet communication module** which allows data conversion so that it can be transmitted via the Internet.

**The invention has the advantage** of allowing real-time control for determining characteristics, functional parameters and performances of progressive actuators without the input signals to be generated by the tested actuator which leads to a reduction in trial duration, higher measurement precision and performing complex trial regimes.

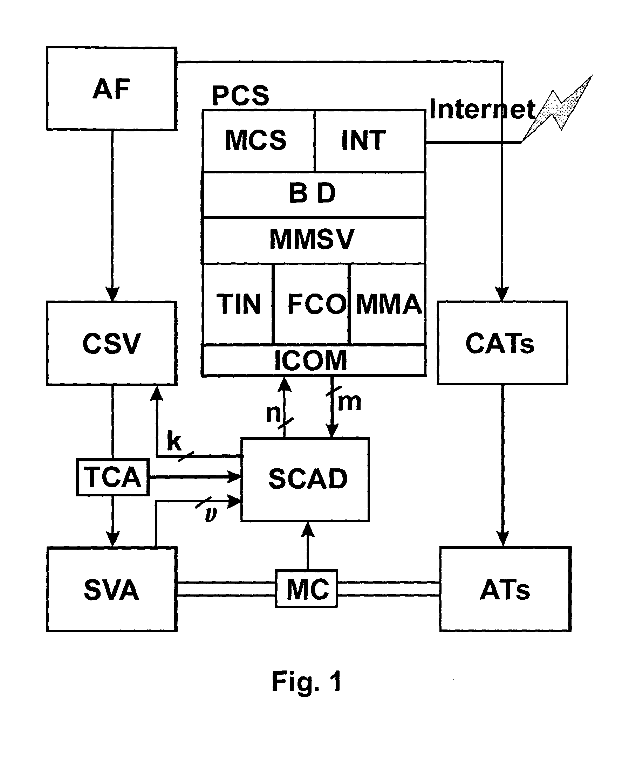

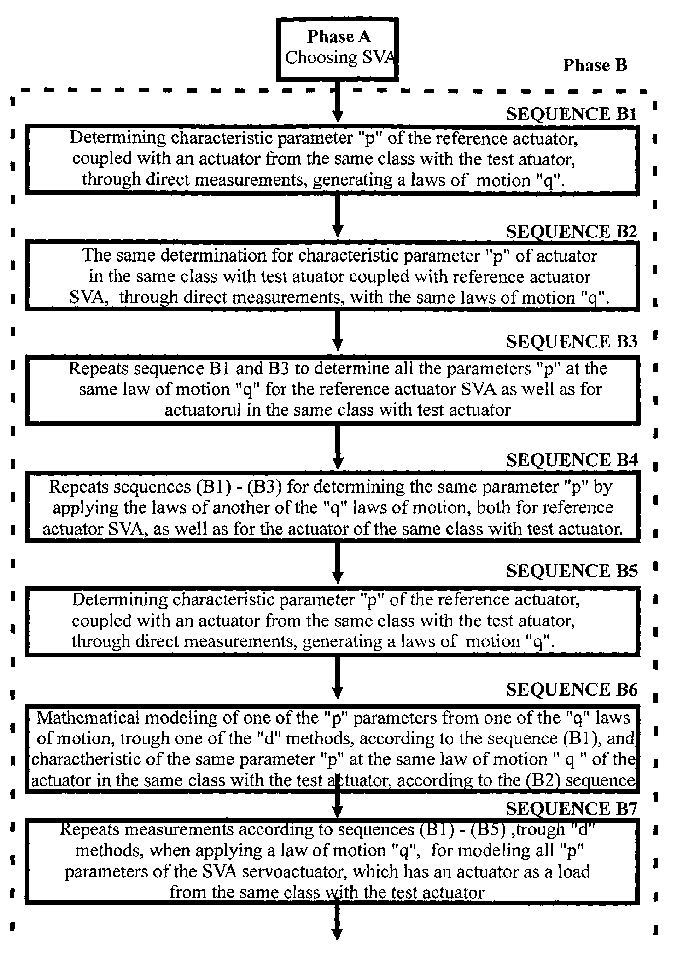

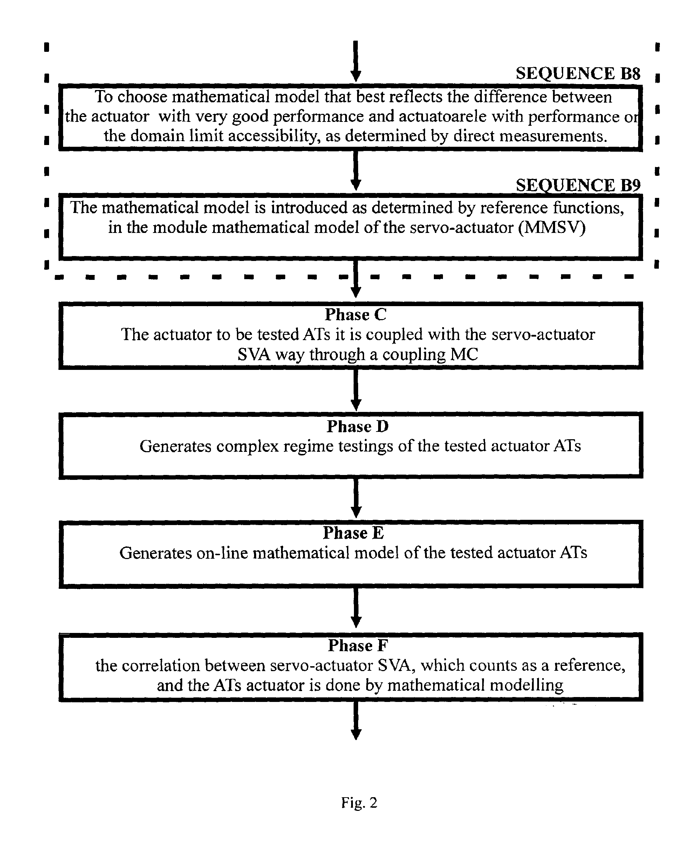

**Below is given an example** of making the invention, referring to fig. 1, which shows a diagram of the device, and fig. 2 which presents the method chart.

**The method conform to this invention consists,** in a first **phase A**, in choosing a SVA servo actuator with high performance related to the tested actuators, as reference for measurements, and which becomes the charge for the ATs testing actuator. **In the next phase** B, a mathematical model is generated off-line of the SVA servo actuator, as reference for measurements, and which will represent the charge of the tested actuator, coupled through a coupling transducer by an actuator of the same class with the tested actuator, using a control system with an open SCAD architecture and a PCS PC-server process system with high speed and large calculation capability. The generation of the signals necessary to obtain the motion laws, for the mathematical modelling without coupling to the test actuator, but coupled with an actuator from the same class as the test actuator is done by the TIN (teach-in) instruction module. Phase B, for the determination of the mathematical model of the servo actuator SVA, contains a series of sequences. **In sequence B1** we determine the feature of one of the "p" parameters of the SVA reference actuator coupled with an actuator from the same class as the test actuator, through direct measurements (transducers mounted on the reference actuator), generating one of the "q" motion law. The number of "p" parameters is minimum I and it can be high enough for a good characterization of the mathematical model of the SVA servo actuator. Examples for the actuators' parameters: power, energy consumed from CSV power controller, dephasing, distortions introduced to the CSV power controller, actuator capacity, actuator's couple. The "q" number of the motion laws is minimum 1 and it can be chosen as high as possible for a good characterization of the mathematical model of the SVA servo actuator. Examples of input signals to generate complex motions systems: Dirac signal, step signal, trapezoid signal, sinusoid signal and/or other signals with predefined motion laws. In sequence **B2** sequence B1 is repeated to determine the characteristic of the same "p" parameter in the same "q" motion law of the actuator from the same class with the test actuator coupled with the SVA reference actuator. **In the following sequence B3,** sequences B1 and B2 are repeated to determine all the "p" parameters at the same "q" motion law, for both the SVA reference actuator and the actuator from the same class as the test actuator. **In sequence B4** sequences B1-B3 are repeated to determine the same "p" parameter by applying another law of the "q" motion laws for both the SVA reference actuator and the actuator from the same class with the test actuator. The sequence B4 continues until it gets to the maximum number of "q" motion laws for the "p" parameters (p.q characteristics). **In the following sequence B5** the mathematical modelling is done for one of the "p" at the application of another law of the "q" motion laws through one of the "d" methods, for example through determining the transfer function between the "p" characteristic at a "q" motion law of the SVA servo actuator, according to the B1 sequence and the characteristic of the same "p" parameter at the same "q" motion law of the actuator from the same class as the test actuator, according to the B2 sequence. Other examples of modelling methods: backward or forward linear prediction, Matlab, Simulink mathematical modelling, statistic prediction methods, fuzzy method modelling. In sequence **B6,** measurements are repeated according to sequences B1-B5 for the modelling, through "d" methods of all "p" parameters at the application of "q" motion laws, of the SVA servo actuator, with the charge of an actuator from the same class as the tested one. In the end of the B phase we obtain the modelling of all the "p" parameters , at the application of "q" motion laws and "d" modelling methods (p.q.d characteristics) of the modelling of the SVA servo actuator. **In sequence B7** the measurements are repeated according to sequences B1-B6 for the modelling, through "d" methods of all "p" parameters at the application of "q" motion laws, of the SVA servo actuator, with the charge of another actuator, of the "t" actuators from the same class as the tested actuator. The "t" number of the actuators from the same class as the test actuator is minimum 1 and it can be high enough for a good characterization of the mathematical model of the SVA servo actuator. Finally we obtain p.q.d.t characteristics of the SVA servo actuator modeling. **In sequence B8** we choose the mathematical model which best reflects the difference between the actuator with very high performance related to the tested actuators, and the actuator with performance at the very limits of the accessibility field, determined through direct measurement. **In sequence B9** the mathematical model thus determined is introduced in the module of mathematical model of the MMSV servo actuator, as a reference function. **In phase C** previous to the measuring procedure in continuous flow, the ATs tested actuator is coupled with the SVA servo actuator through a MC coupling module. **In phase D** we generate the complex trials systems of the ATs tested actuator, motion laws with predefined functions for speed and/or accelerations of trapezoid signal, sinusoid signal and/or other signals with predefined motion laws. **In the following phase E** we generate on-line the mathematical model of the ATs tested actuator performed by the mathematical modelling module of the MMA tested actuator through modelling with the same modelling method considered to be the best in the B off line phase, using the SCAD control system with open architecture and the PC-server process server system. **In phase F** we achieve, through mathematical modelling, a correlation between the SVA servo actuator, which matters as reference, and the ATs actuator. Examples of the correlation between the SVA servo actuator and the ATs actuator through mathematical modelling are: backward or forward linear prediction, Matlab, Simulink mathematical modelling, statistic prediction methods, fuzzy method modelling, the determination of the transfer function respectively of the correlation function between the SVA actuator and the ATs actuator. This function is processed in the calculation module of the FCO mathematical model of correlations, between v signals from the SVA servo actuator module with off-line functioning, which matters as reference, and $v$ on-line functioning signals of the ATs testing actuator, obtained through on-line generation by the CSV power controller in a complex trial system of the instruction functions. Thus, in the end we obtain the real time control of the ATs testing actuator functioning, without generating input signals from the ATs tested actuator through direct measurement.

**The device conform to this invention,** is made up of a **high performance servo-actuator module SVA** related to the tested actuators, which engages, by means of a coupling module MC, the tested actuator ATs, in accordance with certain complex trial regimes generated by the servo-actuator force controller CSV and transmits to the open architecture control system SCAD a number of $v$ measure signals for determining the correlation mathematical model and the mathematical modelling of the tested actuator, **a servo-actuator force controller CSV** which ensures the conversion of the energy from the force supply module AF to the servo-actuator module SVA in accordance with the control signals generated by the open architecture system SCAD, **a tested actuator controller CATs** which ensures the conversion of the energy from the force supply module AF to the tested actuator ATs in accordance with a normal regime without parameter variation, **a coupling module MC** which ensures the mechanical coupling between the servo-actuator module SVA and the tested actuator ATs and sends to the open architecture control system SCAD the measuring signal of the coupling between the two actuators, **a supply control transducer module TCA** which transmits the measuring signals with a view to characterize the force supply of the servo-actuator module SVA, a **open architecture control system SCAD** which receives a number of $v$ measuring signals from the servo-actuator module SVA (acceleration, speed, temperature, electromagnetic flow), from the coupling module MC, from the supply control transducers TCA which it acquires, digitally processes and sends as $n$ measuring signals to the PC-Server module PCS. Also, it receives m control signals from the PC-Server module PCS and through processing transmits $k$ regime control signals to the servo-actuator force controller CSV, a communication interface ICOM which receives n measuring signals from the open architecture system SCAD and transmits m processed signals from the PC-Server PCS, a **PC-Server module** which receives n measuring signals from the open architecture control system and processes them by means of the following software modules: the teach-in module TIN , the mathematical model module of the servo-actuator MMSV, the mathematical modeling module of the tested actuator MMA, the calculation module for the mathematical correlation module FCO, the data base module BD, the statistical characterization module MCS, the Internet communication module INT, a **teach-in module TIN** in offline mode, through which the signals necessary for mathematical modelling of the servo-actuator is generated, without coupling the servo-actuator to the tested actuator, a mathematical model **module of the servo-actuator MMSV** which generates the mathematical model of the servo-actuator on the basis of the n measuring siganls received from the open architecture control system SCAD during the teach-in and represents the input data for the mathematical modelling module of the tested actuator MMA and the calculation module of the correlation mathematical module FCO, a **mathematical modelling module of the tested actuator MMA** in online mode which effects, in real-time, during the testing, the mathematical modelling of the tested actuator ATs by means of the modifications appearing in the $v$ measured signals from the servo-actuator module SVA as a result of the trial actuator coupling ATs and the results of the correlation mathematical model, **a calculation module for the mathematical correlation module FCO** which makes a correlation between $v$ the signals from the servo-actuator module SVA with offline functioning and $v$ the signals with online functioning, a **data base module BD** which, through indexing, memorizes the obtained data for each tested actuator, **a statistical characterization module MCS** which processes data from the data base BD and generates information for the statistical characterization, diagnosis and determining of characteristics, functional parameters and performances of the tested actuator, an **Internet communication module INT** which allows data conversion so that it can be sent through the Internet.

**The following presents the mathematical modelling of the correlation between actuators.** Let $S$ be a dynamic system built of a reference actuator and an installation that allows us couple the test actuator with the reference actuator. Within an interactive presentation the test actuators will represent the new system inputs, while the inferences these inputs exert upon the running characteristics of the reference actuator will represent the system outputs. Also, let us consider that the test actuators are submitted to some preestablished technical verifications and at the beginning of the experiment an observation list (the same for all actuators) has been made, containing the technical parameters that need to be checked. So, following each technical examination a list of values representing the technical characteristics of the test actuator, denoted by $I$ is obtained, as well as a list of values representing the way the test actuator influences the functioning parameters of the reference actuator, denoted by **r**. In processing the mathematical modelling of the correlation off-line, the tested actuators are identified according to **lists of appropriate technical features**. In this way a list of technical features will correspond to a class of actuators (all actuators which verify data from the list). We emphasize the fact that for two different lists $l_1$ and $l_2$, the system output $r$ can be the same.

**One example of modelling procedure based on a probabilistic evaluation. The** events taking place within the series of tests will be perceived as random processes from a mathematic point of view. Let us suppose that we have successively operated $N$ inputs $l_n$, $1 \leq n \leq N$ upon the system $S$. Let $P(r|l_n)$ be the probability that the output r of the reference actuator has been generated by the process $l_n$ (by a reference actuator of class $l_n$). Presuming that one can not act upon the system $S$ with more than a single input at a given time, by means of the total probability we can then express the probability that the system output is a specific one. More exactly, if the expected output is $r$, then

$$P(r) = \sum_{n=1}^{N} w_n P(r \mid l_n), \qquad (1)$$

where $w_n$ is the probability that the process is taking place:

$$l_n, n = 1, 2, .., N, \ \sum_{n=1}^{N} w_n = 1, \qquad (2)$$

Under these circumstances, the probability that afterwards the output r of the system S is generated by the process $l_k$, $1 \leq k \leq N$, is given by Bayes' formula.

$$P(l_k \mid r) = \frac{w_k P(r \mid l_k)}{\sum_{n=1}^{N} w_n P(r \mid l_n)} \qquad (3)$$

Thus a correlation is obtained between the test actuator characteristics $l$ and the reference actuator characteristics **r**., with the observation that in off-line mode a high volume of mathematical calculations is undertaken, followed by the calculation of a single recurrent equation in the on-line phase.

**A second example presents a probabilistic modelling procedure based on a linear prediction**. For mathematical modelling we shall adopt the following conventions:

1) by $l(\mathbf{r})$ we shall understand a list of technical characteristics (or a class of test actuators) that generates the output $r$ once it has been introduced in the system $S$;
2) by $l_n(r)$, $n \geq 1$, we shall denote the list (technical sheet) $l(r)$ obtained within the experiment of degree $n$;
3) we assume that the chain (process) $l_n(r)$, $n \geq 1$, is stationary.

In order to realize the real-time actuator control we need a simple modality to estimate the values of the process $l_n(r)$, (of the technical characteristics list) at a given time, on the basis of a finite number of consecutive anterior observations (samples) $q$. In this respect we shall try to determine the estimated values $\hat{l}_n(r)$ of the process $l_n(r)$, as an expression of the form:

$$\hat{l}_n(r) = -\sum_{k=1}^{q} a_k(q) l_{n-k}(r) \qquad (4),$$

where $\{-a_k(q) | k=1,...,q\}$ represent the coefficients (weights) of the proposed linear combination. In the literature, this drafted mathematical is called one-step forward predictor of degree $q$. Thus, a correlation is obtained between the features of test actuators and those of the reference actuator by determining the following parameters:

$$-a_k(q),\ k=1,2,..,q \qquad (5)$$

To this purpose we shall utilize the classical procedure used to determine the coefficients of a linear predictor. Within this procedure the difference between the authentic vector $l_n(r)$ and the predicted one $\hat{l}_n(r)$, called "prediction error", is firstly being analyzed. We shall denote this difference by $\varepsilon_n(q)$. In the studied case:

$$\varepsilon_n(q)=l_n(r)-\hat{l}_n(r)=l_n(r)+\sum_{k=1}^{q}a_k(q)l_{n-k}(r) \qquad (6)$$

Considering that the fundamental (constituent) space of the process is the probability space $((\Omega,F,P)$ and that E is the mean associated to the probability P, by means of variable $\varepsilon_n(q)$ we can now evaluate the prediction standard deviation $\xi(q)$,

$$\xi_n(q)=E\left(\varepsilon_n^2(q)\right)=E\left(\left(\sum_{i=0}^{q}a_i(q)l_{n-i}(q)\right)\cdot\left(\sum_{j=0}^{q}a_j(q)l_{n-j}(q)\right)\right)=$$

$$=E\left[l_n^2(r)+2\sum_{k=1}^{q}a_k(q)l_n(r)l_{n-k}(r)+\sum_{i=1}^{q}\sum_{j=1}^{q}a_i(q)a_j(q)l_{n-i}(r)l_{n-j}(r)\right]= \qquad (7)$$

$$=\gamma_{nn}(l)+2\sum_{k=1}^{q}a_k(q)\gamma_{n\,n-k}(l)+\sum_{i=1}^{q}\sum_{j=1}^{q}a_i(q)a_j(q)\gamma_{n-i\,n-j}(l),$$

where: $\gamma_{n-i\,n-j}(l)=E(l_{n-i}(r)l_{n-j}(r))$, $i,j=0,1,..,q$, and $a_0(q)=1$.
Due to the result obtained we can now regard the standard deviation error $\xi_n(q)$ as a function of:

$$a_1(q),\ a_2(q),\ ..,\ a_q(q) \qquad (8).$$

We shall further on demonstrate that the function:

$$\xi_n=\xi_n(a_1(q),\ a_2(q),\ ..,\ a_q(q)) \qquad (9)$$

admits a minimum and we shall determine the values of the parameters $a_1(_q)$, $a_2(_q)$, .., $a_q(q)$, that confirm this fact. Because:

$$\frac{\partial^2\xi_n(a_1(q),\ a_2(q),\ ..,\ a_q(q))}{\partial a_i(q)\partial a_j(q)}=\gamma_{n-i\,n-i},\ i,j=1,2,..,q, \qquad (10)$$

square form defined by the matrix

$$\left(\frac{\partial^2 \xi_n(a_1(q), a_2(q), .., a_q(q))}{\partial a_i(q)\partial a_j(q)}\right)_{i,\,j=\overline{1,q}} \quad (11)$$

is positively defined. Indeed,

$$(x_1,..,x_q)(\gamma_{n-i\,n-i})_{i,\,j=\overline{1,q}}\begin{pmatrix} x_1 \\ M \\ x_q \end{pmatrix} = \sum_{i=1}^{q}\sum_{j=1}^{q}\gamma_{n-i n-j}x_i x_j =$$

$$= E\left(\left(\sum_{i=1}^{q}l_{n-i}x_i\right)\left(\sum_{j=1}^{q}l_{n-j}x_j\right)\right) = E\left(\left(\sum_{i=1}^{q}l_{n-i}x_i\right)^2\right), \forall(x_1,..,x_q)\in R^q. \quad (12)$$

It follows that function:

$$\xi_n = \xi_n(a_1(q), a_2(q), .., a_q(q)) \quad (13)$$

admits a minimum point. To find the minimum point we shall resolve the system:

$$\frac{\partial \xi_n(a_1(q), a_2(q), .., a_q(q))}{\partial a_k(q)} = 0, \quad (14)$$

$k = 1,2,..,q$, with the unknowns:

$$a_1(q), a_2(q), .., a_q(q).$$

Since:

$$\frac{\partial \xi_n(a_1(q),..,a_q(q))}{\partial a_k(q)} = 2\gamma_{nn-k}(l) + 2\sum_{i=1}^{q}a_i(q)\gamma_{n-i n-k}(l), \, k = 1,2,..,q, \quad (15)$$

The minimum condition of function $\xi_n(q)$ is given by the system solution:

$$\sum_{i=1}^{q}a_i(q)\gamma_{n-i n-h}(q) = -\gamma_{nn-k}(l), \, k = 1,2,..,q. \quad (16)$$

Let:

$$\left(\overline{a_1}(q),..,\overline{a_q}(q)\right) \qquad (17)$$

be the solution of the above mentioned system.
By replacing:

$$a_1(q) = \overline{a_1}(q),..,a_q(q) = \overline{a_q}(q) \quad (18)$$

in the expression of $\xi_n(q)$ we obtain:

$$\overline{\xi}_n(q) = \min_{\left(a_1(q),..,a_{1_q}(q)\right)} \xi_n\left(\left(a_1(q),..,a_{1_q}(q)\right)\right) = \gamma_{nn}(l) + \sum_{k=1}^{P} \overline{a_k}(q)\gamma_{n-k}(l). \qquad (19)$$

for the prediction minimum standard deviation error.
For this reason we shall define the coefficients

$$a_1(q), a_2(q),.., a_q(q) \qquad (20)$$

of the one-step forward predictor as being equal with

$$\overline{a_1}(q), \overline{a_1}(q),..,\overline{a_q}(q). \quad (21)$$

At this point, the procedure used to determine the estimation $\hat{l}_n(r)$ of the process $l_n(r)$ is finished complete. Thus, in off-line mode, which is a laborious procedure with a high volume of calculations, the following parameters are determined:

$$- a_k(q), \, k = 1,2,..,q \quad (22)$$

followed up in on-line mode by establishing a correlation between the features of test actuators and the reference actuator through mathematical processing of the recurring relationship (4):

$$\hat{l}_n(r) = -\sum_{k=1}^{q} a_k(q)l_{n-k}(r) \qquad (23)$$

The experimental results are in good agreement with the theoretically predicted results for mathematical modelling of the correlation between actuators, which have led to the practical implementation of real time control in continuous flux of actuators.

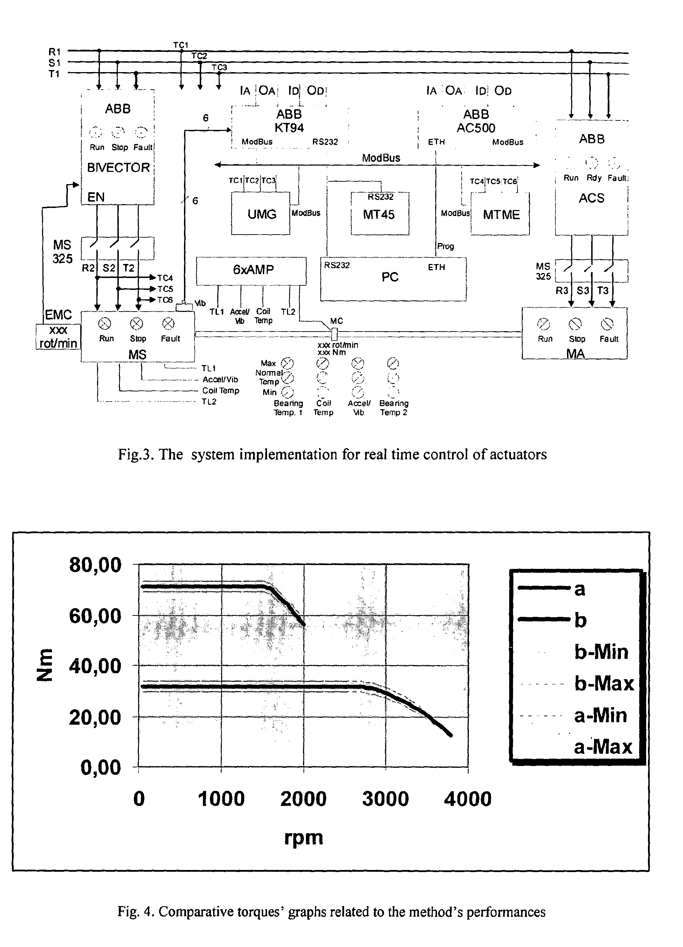

**The following presents an example of realizing the system implementation, referring to figure 3**. The open architecture control system for determining the actuator performances through continuous flux measurements implemented was based on the previously elaborated control method. The servo-actuator force controller (CSV) has been implemented through a high performance Bivector ABB type frequency converter, usually used in positioning, with the speed control domain higher than 1:50,000. In addition to the magnetic flux control loop there is an exterior loop for control in speed through an incremental EMC transducer. An electro-magnetic separator allows energy supply for the reference servo-actuator SVA, on which the measurement transducers are mounted: three-dimensional vibration measurement VB1, torque measurement between the two actuators SVA and ATs, bearing 1 temperature -TL1, bearing 2 temperature TL2, coil temperature TB1-2. Signals sent from the transducers are scaled to a standard signal form through 6 amplifiers: 3 for vibration measurement on 3 axis, one for torque measurement and two for temperature. These signals are processed by the open architecture system SCAD which consists of two PLCs, one of which has the master role, two modules for the measurement of energy parameters (phase currents, tensions on phase and line, total power, active power, reactive power, distortions up to harmonic 15). One of the UMG modules measures energy parameters for the reference servo-motor SVA and the second MTME measures these parameters for the input system. Data exchange between the SCAD modules is done through a MODBUS communication bus, at a speed of 115kbps. Communication between the slave PLC and the process PC is done on a RS232 bus, to which a MT45 intelligent terminal is also connected for graphical interface with the operator. The master PLC communicates with the process PC through a very fast Ethernet data bus. It is noteworthy that the tested servo-actuator does not have any transducers mounted on, energy supply being provided by a CATs frequency converter with normal technical performance.

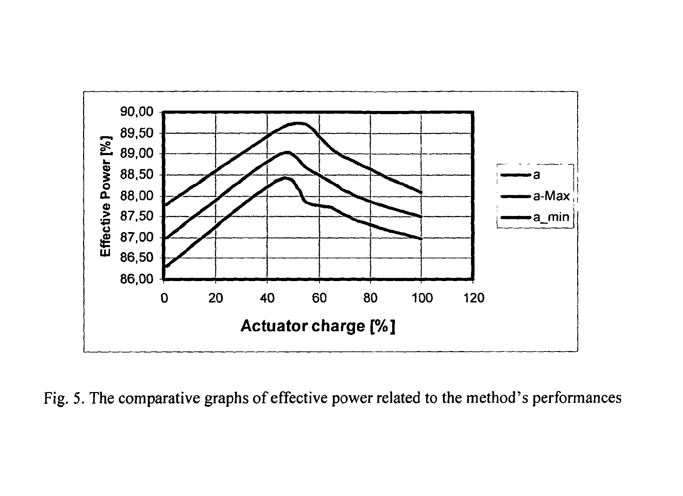

**The following experimental results referring to figures 4 and 5 are presented**. The resulting graphs of the actuators' characteristics are compared in figures 4 and 5, with the first being measured directly and the second obtained through correlation and mathematical prediction, using a reference actuator according to the proposed control method. Thus, it can be seen in both figures that the measurement error is less than 1% between. Figure 4 presents the behaviour of the tested actuator measured directly, where the mechanical rated power 3,8 KW (a), 4,2 KW (b), current to continuous torque 9,8A (a), 15A (b) and rated speed 3000 rpm (a) respectively 1500 rpm (b). The experimentally measured range of the tested actuator are represented by a-Max, b-Max for maximal values and a-Min, b-Min for minimal values. In figure 5 the comparative graphs of effective power related to the method's performances are shown, where curve (a) represents the actuator's efficiency through direct measurement, respectively maximal (a-Max) and minimal (a-Min) values. It is to observe that the actuator performance is within the "premium" range according to the NEMA standard (USA National Electrical Manufacturers). The performances achieved for the control system, that allow controlling the actuators through the presented method, consist of the processing and monitoring with +/- 1% accuracy graphic displays on the computer of the following parameters: apparent, active, reactive power, phase and line currents, phase and line tensions, distortions measurement, harmonics up to level 15, frequency, cosine, vibrations on 3 axles with graphic representation of the medium value of the vibrations and monitoring, temperatures in the engine's bearings and coiling, torque at the engine's shaft.

## Claims

1.    The real-time control method for flow tested actuators, **characterized by** that control is made indirectly and in the first phase (A) a high performance servo-actuator (SVA) related to the tested actuator is chosen, which is a reference for measurements and constitutes itself as charge for the actuator to be tested (ATs), in a second phase (B), a mathematical model for the servo-actuator (SVA) is generated offline using an open architecture control system (SCAD) and a server processing system (PCS) with high speed and high computation power, in the third phase (C) the trial actuator (ATs) is coupled to a servo-actuator (SVA) by means of a coupling model (MC), in the following phase (D) complex trial regimes of the tested actuator ATs are generated, also movement laws with predefined functions of speed and/or acceleration, type trapezoid signal, sinusoid signal and/or other signals with predefined motion laws, in phase (E) the mathematical model of the trial actuator (ATs) is generated online, an operation which is performed by the mathematical modelling module of the actuator tested (MMA) by means of modelling with the same modelling method considered the best in phase (B) offline, using the open architecture control system SCAD and the process server system PC-Server, in phase (F) the mathematical correlation module is effected, between the servo-actuator SVA, which is a reference, and the actuator ATs. This function is processed in the calculation module of the mathematical correlation model (FCO), between $v$ signals from the servo-actuator module (SVA), with offline functioning, set as reference, and $v$ online functioning signals of the actuator to be tested ATs, obtained by means of online generation by the force controller (CSV) in a complex trial regime of online reference tutorial functions, so that real-time control of the trial actuator (ATs) functioning is obtained, without the input signals to be generated by the actuator tested (ATs) through direct measuring.

2.    The real-time control device for actuators, used in order to apply the method in accordance with claim 1, **characterized by** that it is made up of servo-actuator module (SVA) with high performance, related to the tested actuator which serves as charge and through a module engages the coupling (MC), the trial actuator (ATs), an open architecture system which receives $v$ signals from the servo-actuator (SVA), the measuring signals of the coupling between the two actuators from the coupling module (MC), from a supply control transducer module (TCA), the signals it acquire , digitally processes and sends as measuring signals (n) to the processing server system (PCS), a force controller of the servo-actuator (CSV), controlled bycertain signals (k) generated by the open architecture control system (SCAD), a controller of the actuator tested (CATs) and a force supply module (AF).

3. Device in accordance with claim 2, **characterized by** that the process server system module (PCS) communicates through a communication interface (ICOM) with the open architecture control system (SCAD) by sending control signals (m), receives measuring signals (n) from the open architecture control system (SCAD) and integrate in the software part a teach-in module (TIN) by means of which offline signals needed for the mathematical modelling of the servo-actuator (SVA) are generated, before coupling the tested actuator (ATA), a mathematical model module of the servo-actuator (MMSV), which generates the mathematical model of the servo-actuator (SVA), a mathematical modelling module of the actuator tested (MMA) which performs online, during the testing, the mathematical modeling of the actuator tested (ATs) through the modifications that appear in the signals (*v*) measured by the servo-actuator module (SVA) as a result of the coupling of the tested actuator and the results of the correlation effected by a calculation module of the correlation mathematical module (FCO) between the signals (v), from the servo-actuator module (SVA) obtained offline and the signals (*v*) obtained online after the coupling with the tested actuator (ATs), a data base module (BD), which by means of indexing memorizes the data obtained for each of the tested actuators, a statistical characterization module (MCS), which processes the data from the data base and generates information for the statistical characterization, diagnosis and determining of characteristics, functional parameters and performances of the tested actuator and an internet communication module (INT), which allows the data conversion in order to be sent via the internet.

Fig. 1

**Phase A**
Choosing SVA

**Phase B**

**SEQUENCE B1**

Determining characteristic parameter "p" of the reference actuator, coupled with an actuator from the same class with the test atuator, through direct measurements, generating a laws of motion "q".

**SEQUENCE B2**

The same determination for characteristic parameter "p" of actuator in the same class with test atuator coupled with reference actuator SVA, through direct measurements, with the same laws of motion "q".

**SEQUENCE B3**

Repeats sequence B1 and B3 to determine all the parameters "p" at the same law of motion "q" for the reference actuator SVA as well as for actuatorul in the same class with test actuator

**SEQUENCE B4**

Repeats sequences (B1) - (B3) for determining the same parameter "p" by applying the laws of another of the "q" laws of motion, both for reference actuator SVA, as well as for the actuator of the same class with test actuator.

**SEQUENCE B5**

Determining characteristic parameter "p" of the reference actuator, coupled with an actuator from the same class with the test atuator, through direct measurements, generating a laws of motion "q".

**SEQUENCE B6**

Mathematical modeling of one of the "p" parameters from one of the "q" laws of motion, trough one of the "d" methods, according to the sequence (B1), and charactheristic of the same parameter "p" at the same law of motion " q " of the actuator in the same class with the test actuator, according to the (B2) sequence

**SEQUENCE B7**

Repeats measurements according to sequences (B1) - (B5) ,trough "d" methods, when applying a law of motion "q", for modeling all "p" parameters of the SVA servoactuator, which has an actuator as a load from the same class with the test actuator

12

**SEQUENCE B8**

To choose mathematical model that best reflects the difference between the actuator with very good performance and actuatoarele with performance or the domain limit accessibility, as determined by direct measurements.

**SEQUENCE B9**

The mathematical model is introduced as determined by reference functions, in the module mathematical model of the servo-actuator (MMSV)

**Phase C**
The actuator to be tested ATs it is coupled with the servo-actuator SVA way through a coupling MC

**Phase D**
Generates complex regime testings of the tested actuator ATs

**Phase E**
Generates on-line mathematical model of the tested actuator ATs

**Phase F**
the correlation between servo-actuator SVA, which counts as a reference, and the ATs actuator is done by mathematical modelling

Fig. 2

Fig.3. The system implementation for real time control of actuators

Fig. 4. Comparative torques' graphs related to the method's performances

Fig. 5. The comparative graphs of effective power related to the method's performances

Europäisches
Patentamt

European
Patent Office

Office européen
des brevets

**EUROPEAN SEARCH REPORT**

Application Number

EP 08 46 4013

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/171062 A1 (HIRANO TOSHIKI [US] ET AL) 3 August 2006 (2006-08-03) * paragraph [0014] * ----- | 1 | INV. G05B23/02 |
| | | | TECHNICAL FIELDS SEARCHED (IPC) G05B |

The present search report has been drawn up for all claims

| Place of search | Date of completion of the search | Examiner |
|---|---|---|
| The Hague | 10 February 2009 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 46 4013

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2009

| Patent document cited in search report | Publication date | Patent family member(s) | Publication date |
|---|---|---|---|
| US 2006171062 A1 | 03-08-2006 | NONE | |

EPO FORM P0459